# EUROPEAN PATENT APPLICATION

(11) **EP 4 817 778 A1**
(43) Date of publication of application: **07.10.2026**
(21) Application number: 26163253.3
(22) Date of filing: 09.03.2026
(51) Int. Cl.: B23K 20/02, B23K 11/11, B23K 11/20, B23K 11/25, B23K 103/10

(54) **SOLID-PHASE JOINING METHOD AND SOLID-PHASE JOINING APPARATUS**

(30) Priority: 31.03.2025 JP 2025058020
(71) Applicant: The University of Osaka, Osaka 565-0871 (JP); DAIHEN Corporation, Yodogawa-ku Osaka-shi Osaka 532-8512 (JP)
(72) Inventor: FUJII, Hidetoshi, Osaka, 565-0871 (JP); MORISADA, Yoshiaki, Osaka, 565-0871 (JP); MIYAUCHI, Takaaki, Osaka, 532-8512 (JP)
(74) Representative: Zacco GmbH

(57) **Abstract**

A solid-phase joining method includes forming a projection (6, 7) at at least one of a first workpiece (W10) and a second workpiece (W20) (step S1 to step S3), starting current feed to the first workpiece (W10) and the second workpiece (W20) while a pair of pressurization shafts (11, 12) presses the first workpiece (W10) and the second workpiece (W20) (step S4), and terminating current feed by a pair of electrodes (21, 22) (step S8) while pressing by the pair of pressurization shafts (11, 12) continues (step S5 to step S7, step S9) in response to an amount of push-in of the pair of pressurization shafts (11, 12) in a thickness direction of the first workpiece (W10) and the second workpiece (W20) from start of pressing by the pair of pressurization shafts (11, 12) reaching a setting value.

## Description

### CROSS REFERENCE TO RELATED APPLICATIONS

This nonprovisional application is based on Japanese Patent Application No. 2025-058020 filed with the Japan Patent Office on March 31, 2025, the entire contents of which are hereby incorporated by reference.

### BACKGROUND OF THE INVENTION

### Field of the Invention

The present disclosure relates to a solid-phase joining method and a solid-phase joining apparatus.

### Description of the Background Art

Japanese Patent Laying-Open No. 2024-171119 discloses a resistance spot joining method with a pressurization shaft and an electrode, of solid-phase joining a workpiece to be joined, by performing a projection forming step, an unloading step, a current feed step, and a joining step.

In Japanese Patent Laying-Open No. 2024-171119, control is carried out to join the workpiece by softening the workpiece by increasing a temperature of a joint region of the workpiece by current feed from the electrode to the joint region of the workpiece and pressing the workpiece with the pressurization shaft.

In a conventional solid-phase joining apparatus, even when the workpiece deforms due to softening thereof by current feed, a state of contact between the workpiece and the electrode is maintained by adjusting a position of the electrode with an apparatus such as an air cylinder.

### SUMMARY OF THE INVENTION

In joining soft metal to soft metal such as joining aluminum to aluminum with a solid-phase joining apparatus, however, adjustment of a position of the electrode may not be able to achieve following quick deformation of the workpiece increased in temperature by current feed.

When adjustment of the position of the electrode is thus unable to achieve following quick deformation of the workpiece increased in temperature by current feed, a gap is produced between the workpiece and the electrode. Such production of a gap leads to occurrence of discharging between the workpiece and the electrode. Such occurrence of discharging causes lowering in quality of solid-phase joining such as production of a molten portion in the workpiece.

An object of the present disclosure is to achieve suppression of lowering in quality of solid-phase joining that may be caused by feed of a current from an electrode to a workpiece.

A solid-phase joining method in the present disclosure includes forming a projection at at least one of a first workpiece and a second workpiece layered on each other in a thickness direction by pressing the first workpiece and the second workpiece with a pair of pressurization shafts arranged at opposing sides in the thickness direction, starting current feed to the first workpiece and the second workpiece from a pair of electrodes while the pair of pressurization shafts presses the first workpiece and the second workpiece, the pair of electrodes being arranged around the pair of pressurization shafts and being in contact with the first workpiece and the second workpiece, respectively, and terminating current feed by the pair of electrodes while pressing by the pair of pressurization shafts continues, in response to an amount of push-in of the pair of pressurization shafts in the thickness direction of the first workpiece and the second workpiece from start of pressing by the pair of pressurization shafts reaching a setting value.

A solid-phase joining apparatus in the present disclosure includes a pair of pressurization shafts that presses a first workpiece and a second workpiece layered in a thickness direction, from opposing sides in the thickness direction, a pair of electrodes arranged around the pair of pressurization shafts, respectively, and a controller that controls the pair of pressurization shafts and the pair of electrodes. The controller carries out control such that a projection is formed at at least one of the first workpiece and the second workpiece by the pair of pressurization shafts pressing the first workpiece and the second workpiece, current feed from the pair of electrodes in contact with the first workpiece and the second workpiece to the first workpiece and the second workpiece is started while the pair of pressurization shafts presses the first workpiece and the second workpiece, and current feed by the pair of electrodes is terminated while pressing by the pair of pressurization shafts continues, in response to an amount of push-in of the pair of pressurization shafts in the thickness direction of the first workpiece and the second workpiece from start of pressing by the pair of pressurization shafts reaching a setting value.

The foregoing and other objects, features, aspects and advantages of this invention will become more apparent from the following detailed description of this invention when taken in conjunction with the accompanying drawings.

### BRIEF DESCRIPTION OF THE DRAWINGS

Fig. 1 is a diagram schematically showing a solid-phase joining apparatus with which a solid-phase joining method according to an embodiment is performed.
Fig. 2 is a diagram showing change of a state of contact between a workpiece and an electrode in solid-phase joining.
Fig. 3 is a diagram showing relation between an amount of push-in of a pair of pressurization shafts and control of current feed from a pair of electrodes in the solid-phase joining method according to the present embodiment.
Fig. 4 is a flowchart showing a flow of control in the solid-phase joining method according to the present embodiment.

### DESCRIPTION OF THE PREFERRED EMBODIMENTS

An embodiment of the present disclosure will be described in detail below with reference to the drawings. The same or corresponding elements in the drawings have the same reference characters allotted and description thereof will not be repeated. Though a plurality of embodiments inclusive also of modifications will be described below, combination as appropriate of features described in the embodiments and features described as modifications is originally intended.

### <Description of Configuration of Solid-Phase Joining Apparatus 1>

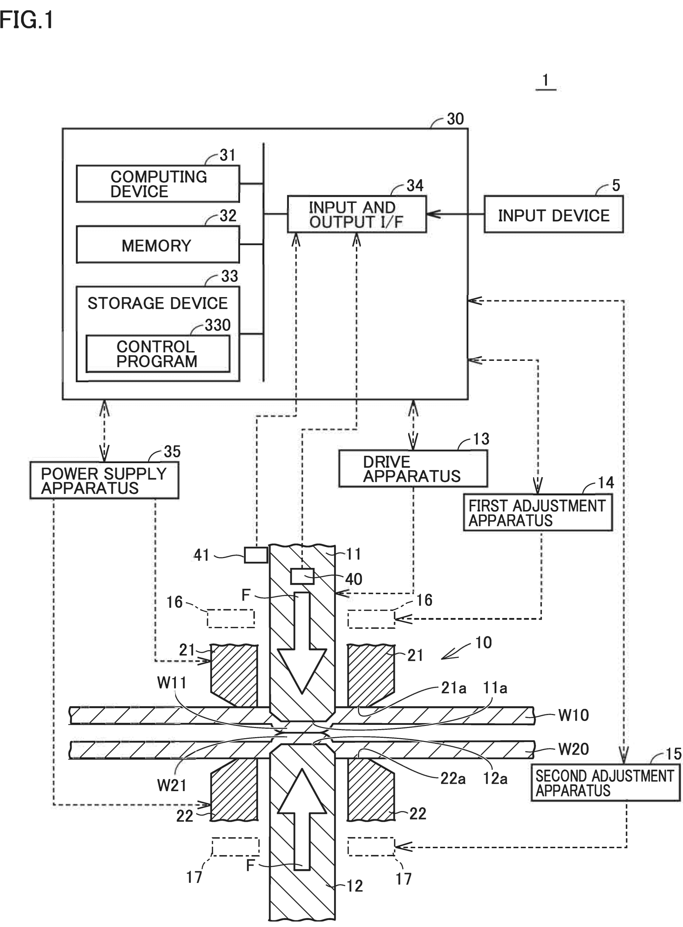

Fig. 1 is a diagram schematically showing a solid-phase joining apparatus 1 with which a solid-phase joining method according to an embodiment is performed. Solid-phase joining apparatus 1 is an apparatus that joins a plurality of workpieces W10 and W20 layered on each other while they are in a solid-phase state without being molten, by plastic deformation of a softened region as a region of joint while the softened region is formed at an interface between the plurality of workpieces W10 and W20 by current feed to the plurality of workpieces W10 and W20.

The plurality of workpieces W10 and W20 include a first workpiece W10 and a second workpiece W20. Each of workpieces W10 and W20 is, for example, in a form of a flat plate. First workpiece W10 and second workpiece W20 are layered in a thickness direction thereof.

In this embodiment, first workpiece W10 and second workpiece W20 are composed of the same material. In this embodiment, first workpiece W10 and second workpiece W20 are both composed of an aluminum alloy.

First workpiece W10 and second workpiece W20 should only be composed of soft metal relatively low in deformation resistance, without being limited to the aluminum alloy. Therefore, first workpiece W10 and second workpiece W20 may be composed of soft metal other than the aluminum alloy, such as aluminum, gold, and silver. First workpiece W10 and second workpiece W20 may be composed of an identical metal material as in joining, for example, aluminum alloys to each other, or may be composed of different metal materials as in joining, for example, gold and silver to each other.

Each of workpieces W10 and W20 may be composed of a material other than metal, and should only be made of a raw material that is conductive and suitable for solid-phase joining.

As shown in Fig. 1, solid-phase joining apparatus 1 includes solid-phase joining equipment 10, a controller 30, a power supply apparatus 35, a drive apparatus 13, a first adjustment apparatus 14, a second adjustment apparatus 15, a first air cylinder 16, a second air cylinder 17, and an input device 5. Solid-phase joining equipment 10 includes a pair of pressurization shafts 11 and 12, a pair of electrodes 21 and 22, a pressure sensor 40, and a movement amount sensor 41.

The pair of pressurization shafts 11 and 12 includes a first pressurization shaft 11 and a second pressurization shaft 12. The pair of pressurization shafts 11 and 12 can apply a pressure from opposing sides in the thickness direction in which first workpiece W10 and second workpiece W20 in the form of the plate are layered on each other. First pressurization shaft 11 is driven by drive apparatus 13. Second pressurization shaft 12 is fixed. Drive apparatus 13 includes, for example, a servo motor. First pressurization shaft 11 and second pressurization shaft 12 may both be driven by individual drive apparatuses or a common drive apparatus.

First pressurization shaft 11 can press first workpiece W10 to plastically deform first workpiece W10. First pressurization shaft 11 is composed, for example, of tungsten carbide. In the present embodiment, first pressurization shaft 11 is formed in an elongated columnar shape. First pressurization shaft 11 is provided with a pressing surface 11a that presses first workpiece W10. Pressing surface 11a is an end surface of first pressurization shaft 11. Pressing surface 11a is circularly formed.

Second pressurization shaft 12 is the same in configuration as first pressurization shaft 11. Second pressurization shaft 12 is arranged in a posture such that a central axis thereof is located on an extension of a central axis of first pressurization shaft 11 and a pressing surface 12a of second pressurization shaft 12 is opposed to pressing surface 11a of first pressurization shaft 11. First pressurization shaft 11 and second pressurization shaft 12 may be in a shape other than the columnar shape.

Pressure sensor 40 is a sensor that detects a pressure applied to first pressurization shaft 11. Pressure sensor 40 is provided, for example, at first pressurization shaft 11. In the present embodiment, a load cell is employed as pressure sensor 40. A location where pressure sensor 40 is placed is not limited to first pressurization shaft 11, and the pressure sensor may be provided at drive apparatus 13 or the like. Pressure sensor 40 may be provided at both of first pressurization shaft 11 and second pressurization shaft 12.

Movement amount sensor 41 is a sensor that detects an amount of movement (which will also be called an amount of push-in below) in a direction of an axial length of first pressurization shaft 11. Movement amount sensor 41 is provided, for example, at first pressurization shaft 11. In the present embodiment, a linear encoder is employed as movement amount sensor 41. In a configuration where second pressurization shaft 12 moves, movement amount sensor 41 may be provided at both of first pressurization shaft 11 and second pressurization shaft 12.

The pair of electrodes 21 and 22 includes a first electrode 21 and a second electrode 22. The pair of electrodes 21 and 22 can feed a current to first workpiece W10 and second workpiece W20 while they are in contact with first workpiece W10 and second workpiece W20. As a voltage is applied to the pair of electrodes 21 and 22 from power supply apparatus 35 while the pair of electrodes 21 and 22 are in contact with first workpiece W10 and second workpiece W20, the current is supplied to first electrode 21, first workpiece W10, second workpiece W20, and second electrode 22.

First electrode 21 can be in contact with a part of first workpiece W10 around a part to which the pressure is applied by first pressurization shaft 11. In the present embodiment, first electrode 21 is formed in a cylindrical shape that surrounds first pressurization shaft 11. A gap is provided between an inner circumferential surface of first electrode 21 and an outer circumferential surface of first pressurization shaft 11. First electrode 21 is composed, for example, of copper. First electrode 21 is provided with a contact surface 21a in contact with first workpiece W10. Contact surface 21a is annularly formed. The shape of contact surface 21a is not limited to the annular shape.

Second electrode 22 can be in contact with a part of second workpiece W20 around a part to which the pressure is applied by second pressurization shaft 12. In the present embodiment, second electrode 22 is formed in a cylindrical shape that surrounds second pressurization shaft 12. A gap is provided between an inner circumferential surface of second electrode 22 and an outer circumferential surface of second pressurization shaft 12. Second electrode 22 is composed, for example, of copper. Second electrode 22 is provided with a contact surface 22a in contact with second workpiece W20. Contact surface 22a is annularly formed. The shape of contact surface 22a is not limited to the annular shape. Second electrode 22 is arranged in a posture such that a central axis of second electrode 22 is located on an extension of a central axis of first electrode 21 and contact surface 22a of second electrode 22 is opposed to contact surface 21a of first electrode 21.

A position of first electrode 21 in the thickness direction of first workpiece W10 is adjusted by first adjustment apparatus 14 and first air cylinder 16. A position of second electrode 22 in the thickness direction of second workpiece W20 is adjusted by second adjustment apparatus 15 and second air cylinder 17. First adjustment apparatus 14 is an apparatus that adjusts an arrangement position of first air cylinder 16 itself. Second adjustment apparatus 15 is an apparatus that adjusts an arrangement position of second air cylinder 17 itself.

First air cylinder 16 is an apparatus in which a piston provided inside a cylinder operates in accordance with an air pressure within the cylinder and a piston rod moves in the direction of the axial length in accordance with operations of the piston. In first air cylinder 16, a tip end of the piston rod is connected to first electrode 21. In first air cylinder 16, the piston rod can operate in the direction of the axial length by an internal pressure in the cylinder such that first electrode 21 is in contact with first workpiece W10.

In an initial state, such a position of arrangement of first air cylinder 16 itself is adjusted by first adjustment apparatus 14 such that first electrode 21 connected to the piston rod is in contact with first workpiece W10 at predetermined force while the piston rod is located at a reference position (the position of the piston rod while air at a reference pressure is sealed within the cylinder).

First adjustment apparatus 14 is implemented by a position adjustment mechanism capable of changing a position of placement of first air cylinder 16 itself by a drive source such as a motor.

When first workpiece W10 deforms in a direction toward first air cylinder 16, the piston rod operates in a direction to compress air within the cylinder in first air cylinder 16, so that the position of first electrode 21 changes as following deformation of first workpiece W10 to maintain a state of contact with first workpiece W10. When first workpiece W10 deforms in a direction away from first air cylinder 16, on the other hand, in first air cylinder 16, the piston rod operates in a direction to expand air within the cylinder to maintain the state of contact of first electrode 21 with first workpiece W10.

Similarly to first air cylinder 16, second air cylinder 17 is an apparatus in which a piston provided inside a cylinder operates in accordance with an air pressure within the cylinder and a piston rod moves in the direction of the axial length in accordance with operations of the piston. In second air cylinder 17, a tip end of the piston rod is connected to second electrode 22. In second air cylinder 17, the piston rod can operate in the direction of the axial length by an internal pressure in the cylinder such that second electrode 22 is in contact with second workpiece W20.

In the initial state, such a position of arrangement of second air cylinder 17 itself is adjusted by second adjustment apparatus 15 such that second electrode 22 connected to the piston rod is in contact with second workpiece W20 at predetermined force while the piston rod is located at a reference position (the position of the piston rod while air at the reference pressure is sealed within the cylinder).

Second adjustment apparatus 15 is implemented by a position adjustment mechanism capable of changing a position of placement of second air cylinder 17 itself by a drive source such as a motor.

When second workpiece W20 deforms in a direction toward second air cylinder 17, the piston rod operates in a direction to compress air within the cylinder in second air cylinder 17, so that the position of second electrode 22 changes as following deformation of second workpiece W20 to maintain a state of contact of electrode 22 with second workpiece W20. When second workpiece W20 deforms in a direction away from second air cylinder 17, on the other hand, in second air cylinder 17, the piston rod operates in a direction to expand air within the cylinder to maintain the state of contact of second electrode 22 with second workpiece W20.

Controller 30 includes a computing device 31, a memory 32, a storage device 33, and an input and output interface 34. These components are connected to one another through a bus.

Computing device 31 is a computing entity (computer) that performs prescribed processing. Computing device 31 is configured, for example, with a processor such as a central processing unit (CPU), a micro-processing unit (MPU), a tensor processing unit (TPU), or a graphics processing unit (GPU). Though the processor which is exemplary computing device 31 performs a function to perform prescribed processing by executing a prescribed program, some or all of functions may be implemented by dedicated hardware circuitry such as an application specific integrated circuit (ASIC) or a field-programmable gate array (FPGA). The "processor" is not limited to a processor in a narrow sense that performs processing in accordance with a stored program architecture like the CPU, the MPU, the TPU, or the GPU, but may encompass hard-wired circuitry such as the ASIC or the FPGA. Computing device 31 is not limited to a von Neumann computer such as the CPU or the GPU but may be implemented by a non von Neumann computer such as a quantum computer or an optical computer. Computing device 31 as described above may also be read as processing circuitry that performs prescribed processing. Computing device 31 may be implemented by a single chip or a plurality of chips. Furthermore, the processor and relating processing circuitry may be implemented by a plurality of computers connected to one another through wires or wirelessly over a local area network or a wireless network. The processor and the relating processing circuitry may be implemented by a cloud computer that performs remote computation based on input data and outputs a result of computation to another device located at a remote position.

Memory 32 includes a storage area (for example, a working area) where a program code, a work memory, or the like is stored in execution of various programs by computing device 31. Examples of memory 32 include a volatile memory such as a DRAM and an SRAM or a non-volatile memory such as a ROM and a flash memory.

Various programs to be executed by computing device 31, various types of data, or the like are stored in storage device 33. For example, a control program 330 to be executed by computing device 31 for control of various devices is stored in storage device 33. Storage device 33 may be implemented by one or more non-transitory computer readable media or one or more computer readable storage media. Examples of storage device 33 include a hard disk drive (HDD), a solid state drive (SSD), and the like.

Data detected by a sensor such as pressure sensor 40 and movement amount sensor 41 is inputted to input and output interface 34. Input device 5 is connected to controller 30. Input device 5 is composed of one or more devices among devices with which data can be inputted, such as a keyboard, a mouse, and a touch pad. Data inputted from the input device can be inputted to computing device 31 and memory 32 through input and output interface 34.

Controller 30 controls a stroke of first pressurization shaft 11 by controlling drive apparatus 13. Controller 30 controls an arrangement position of first air cylinder 16 by controlling first adjustment apparatus 14. Controller 30 controls an arrangement position of second air cylinder 17 by controlling second adjustment apparatus 15. Controller 30 controls a supply current to be supplied to the pair of electrodes 21 and 22 by controlling power supply apparatus 35.

Specifically, controller 30 controls drive apparatus 13 to move first pressurization shaft 11 toward first workpiece W10, to thereby control a load F to be applied to first workpiece W10 and second workpiece W20 by the pair of pressurization shafts 11 and 12, respectively, and an amount of push-in of the pair of pressurization shafts 11 and 12. Controller 30 adjusts the arrangement position of first air cylinder 16 itself by controlling first adjustment apparatus 14, so that first electrode 21 can be in contact with first workpiece W10. Controller 30 adjusts the arrangement position of second air cylinder 17 itself by controlling second adjustment apparatus 15, so that second electrode 22 can be in contact with second workpiece W20. Controller 30 controls power supply apparatus 35 to control the current to be fed from the pair of electrodes 21 and 22 to first workpiece W10 and second workpiece W20.

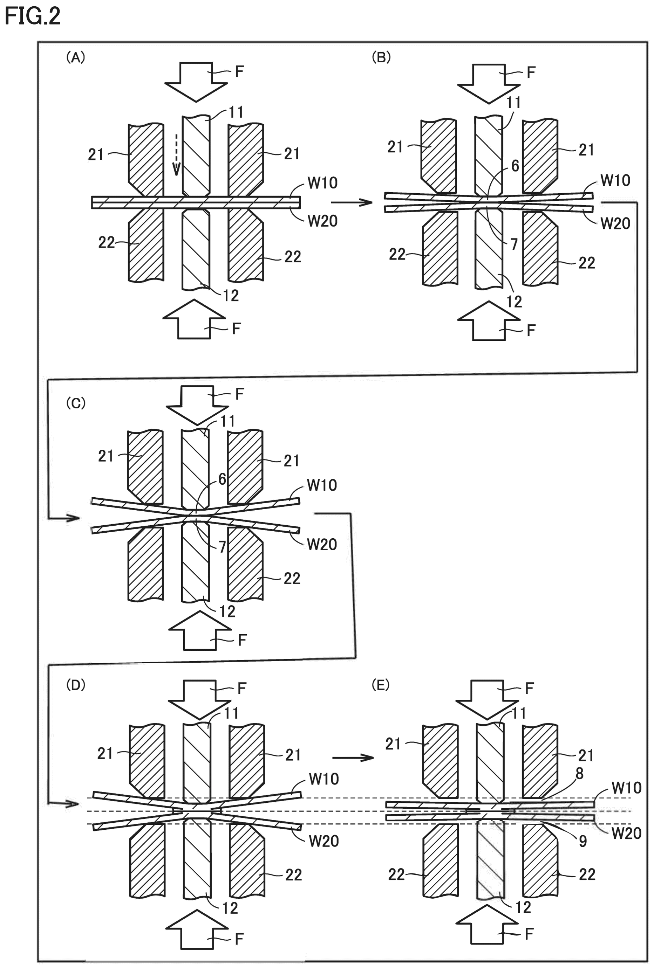

Controller 30 controls drive apparatus 13 such that load F is applied from the pair of pressurization shafts 11 and 12 to first workpiece W10 and second workpiece W20. Thus, at first workpiece W10 and second workpiece W20, a projection 6 or 7 as shown, for example, in Fig. 2(C) is formed.

Controller 30 then controls power supply apparatus 35 such that the pair of electrodes 21 and 22 feeds the current to first workpiece W10 and second workpiece W20 in addition to application of the pressure (pressing) by pressurization shafts 11 and 12 to first workpiece W10 and second workpiece W20. The current thus flows in first workpiece W10 and second workpiece W20. Specifically, controller 30 controls power supply apparatus 35 such that the current flows in first workpiece W10 and second workpiece W20 while contact surface 21a of first electrode 21 is in contact with the part of first workpiece W10 around the part pressed by first pressurization shaft 11 and contact surface 22a of second electrode 22 is in contact with the part of second workpiece W20 around the part pressed by second pressurization shaft 12.

### <Description of Change of State of Contact Between Workpiece and Electrode in Solid-Phase Joining>

Change of a state of contact between the workpiece and the electrode in solid-phase joining will now be described. In solid-phase joining apparatus 1, in joining first workpiece W10 and second workpiece W20, a projection forming step is performed and thereafter a joining step is performed.

Fig. 2 is a diagram showing change of a state of contact between the workpiece and the electrode in solid-phase joining. Figs. 2(A) to 2(E) show a process of change of the state of contact between first workpiece W10 and first electrode 21 and the state of contact between second workpiece W20 and second electrode 22 in solid-phase joining.

As shown in Fig. 2(A), in a stage before start of the projection forming step, first workpiece W10 in the form of the plate and second workpiece W20 in the form of the plate are arranged as being layered on each other in the thickness direction. As shown in Fig. 2(A), in the stage before start of the projection forming step, controller 30 controls first adjustment apparatus 14 and second adjustment apparatus 15 such that first workpiece W10 and first electrode 21 are in contact with each other and second workpiece W20 and second electrode 22 are in contact with each other.

In the projection forming step, controller 30 carries out control as below. As shown in Fig. 2(A), second pressurization shaft 12 at a fixed side is in contact with second workpiece W20, and controller 30 has first pressurization shaft 11 at a movable side move to a position where it is in contact with first workpiece W10 as shown with a dashed arrow. In solid-phase joining, a position of first pressurization shaft 11 where first pressurization shaft 11 is in contact with first workpiece W10 and second pressurization shaft 12 is in contact with second workpiece W20 as in Fig. 2(A) is a push-in start position.

In an example where both of first pressurization shaft 11 and second pressurization shaft 12 are movable, in the projection forming step, controller 30 carries out control such that first pressurization shaft 11 moves to a position where it is in contact with first workpiece W10 and second pressurization shaft 12 moves to a position where it is in contact with second workpiece W20.

Though an example where first pressurization shaft 11 at the movable side is caused to operate in the projection forming step and the joining step is explained in the description below, in an example where both of first pressurization shaft 11 and second pressurization shaft 12 are movable, controller 30 controls also second pressurization shaft 12 to perform operations similar to the operations of first pressurization shaft 11 which will be described below.

Controller 30 then controls drive apparatus 13 to push in the pair of pressurization shafts 11 and 12 from the push-in start position shown in Fig. 2(A) to a projection formation position set in advance as shown in Fig. 2(C). Load F is thus applied to the pair of pressurization shafts 11 and 12, first workpiece W10 and second workpiece W20 deform as shown in Figs. 2(B) and 2(C), projection 6 is formed at first workpiece W10, and also projection 7 is formed at second workpiece W20.

As shown in Fig. 2(C), controller 30 performs the joining step after the projection forming step of forming projection 6 at first workpiece W10 and forming projection 7 at second workpiece W20.

In the joining step, controller 30 carries out control as below. In the state as shown in Fig. 2(C), controller 30 controls power supply apparatus 35 to carry out current feed to feed the current for joining from the pair of electrodes 21 and 22 to first workpiece W10 and second workpiece W20.

Furthermore, in the state as shown in Fig. 2(C), controller 30 controls drive apparatus 13 to start an operation to push in the pair of pressurization shafts 11 and 12 to a joint position set in advance. The pair of pressurization shafts 11 and 12 is thus pushed in as far as the joint position via states as shown in Figs. 2(D) and 2(E), and first workpiece W10 and second workpiece W20 are joined.

Thus, in the joining step, controller 30 carries out control to have operations performed to push in the pair of pressurization shafts 11 and 12 as far as the joint position while the current is fed from the pair of electrodes 21 and 22 to first workpiece W10 and second workpiece W20. Thus, in the joining step, while a softened region as a region of joint is formed at an interface between first workpiece W10 and second workpiece W20, load F is applied to the softened region and the softened region is plastically deformed as a result of push-in of the pair of pressurization shafts 11 and 12, so that first workpiece W10 and second workpiece W20 are joined to each other while they are in the solid-phase state without being molten.

The current is fed from the pair of electrodes 21 and 22 to first workpiece W10 and second workpiece W20 in the joining step. As first workpiece W10 and second workpiece W20 are softened, however, for example, first workpiece W10 and second workpiece W20 may quickly change from a shape as in Fig. 2(D) to a shape as in Fig. 2(E).

When first workpiece W10 thus quickly changes, a gap 8 may be produced between first workpiece W10 and electrode 21, because following of the position of first electrode 21 by first air cylinder 16 is too late. Similarly, when second workpiece W20 thus quickly changes, a gap 9 may be produced between second workpiece W20 and electrode 22, because following of the position of second electrode 22 by second air cylinder 17 is too late.

If a voltage is being applied to first electrode 21 when gap 8 is thus produced between first workpiece W10 and first electrode 21, discharging may occur between first workpiece W10 and first electrode 21. Similarly, if a voltage is being applied to second electrode 22 when gap 9 is produced between second workpiece W20 and second electrode 22, discharging may occur between second workpiece W20 and second electrode 22. Such occurrence of discharging may lower quality of solid-phase joining.

Then, in solid-phase joining apparatus 1 in the present embodiment, controller 30 carries out control to terminate current feed from first electrode 21 and second electrode 22 before at least one of gap 8 between first workpiece W10 and first electrode 21 and gap 9 between second workpiece W20 and second electrode 22 is produced.

Specifically, in the present embodiment, controller 30 carries out control as below in response to confirmation by experiments or the like that an amount of push-in of the pair of pressurization shafts 11 and 12 and production of gap 8 or 9 relate to each other. In the joining step, controller 30 carries out control to terminate current feed from first electrode 21 and second electrode 22 when the amount of push-in of the pair of pressurization shafts 11 and 12 reaches a setting value set as the amount of push-in before reaching the amount of push-in at which at least one of gap 8 between first workpiece W10 and first electrode 21 and gap 9 between second workpiece W20 and second electrode 22 is produced.

### <Relation Between Amount of Push-in and Control of Current Feed in Solid-Phase Joining>

Relation between the amount of push-in of the pair of pressurization shafts 11 and 12 and control of current feed from the pair of electrodes 21 and 22 in the solid-phase joining method according to the present embodiment will now be described.

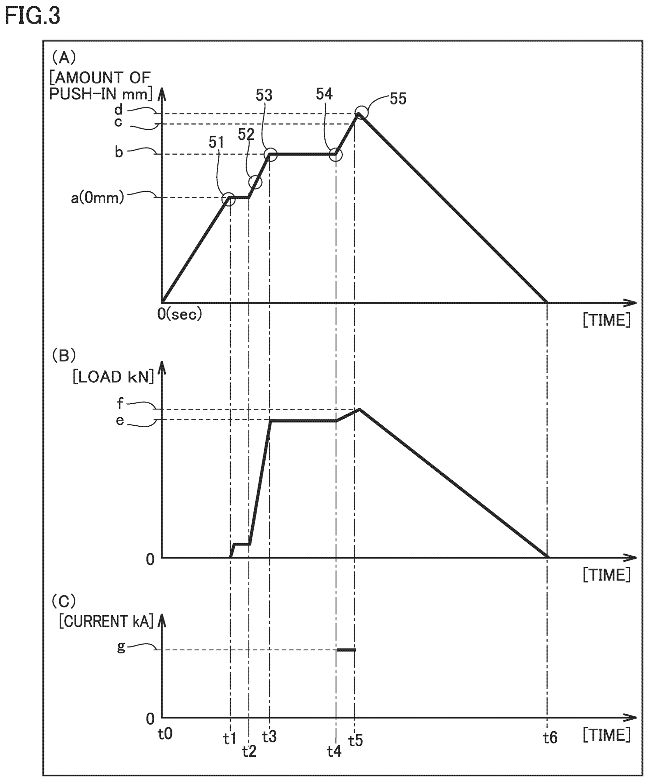

Fig. 3 is a diagram showing relation between the amount of push-in of the pair of pressurization shafts 11 and 12 and control of current feed from the pair of electrodes 21 and 22 in the solid-phase joining method according to the present embodiment.

Fig. 3 shows relation among the amount of push-in of the pair of pressurization shafts 11 and 12, pressing load in accordance with the amount of push-in, and control of current feed from the pair of electrodes 21 and 22 in accordance with the amount of push-in, during a period from time t0 to time t6.

Fig. 3(A) shows the amount of push-in (mm) of the pair of pressurization shafts 11 and 12 with lapse of time. Fig. 3(B) shows a load (kN) with lapse of time, the load being a pressing load applied to first workpiece W10 and second workpiece W20 in response to the amount of push-in of the pair of pressurization shafts 11 and 12 reaching the amount of push-in as shown in Fig. 3(A). Fig. 3(C) shows a current (kA) fed from the pair of electrodes 21 and 22 to first workpiece W10 and second workpiece W20.

In the example where the projection forming step in solid-phase joining is performed, controller 30 carries out control to move first pressurization shaft 11 during a period from time t0 to time t1 such that the pair of pressurization shafts 11 and 12 is arranged at the push-in start position shown in Fig. 2(A), as in a period until first timing 51 in Fig. 3(A). Fig. 3(A) shows the amount of push-in, with the amount of push-in at the push-in start position shown in Fig. 2(A) being defined as an initial value a (0 mm).

When the projection forming step is performed, as shown in Fig. 3(A), after the amount of push-in becomes constant during a period from time t1 until time t2, at time t2, controller 30 starts control to increase the amount of push-in from initial value a to a first setting value b. First setting value b is the setting value for the amount of push-in set as a target value for forming projection 6 or 7 as in Fig. 2(C). First setting value b is set based on data of the workpiece, including a thickness and a material of first workpiece W10 and second workpiece W20.

At second timing 52 shown in Fig. 3(A) at which the amount of push-in is increasing from initial value a, projections 6 and 7 start to be formed at first workpiece W10 and second workpiece W20 as in Fig. 2(B). Then, when third timing 53 comes at time t3 shown in Fig. 3(A) at which the amount of push-in reaches first setting value b, projections 6 and 7 at first workpiece W10 and second workpiece W20 are in final shapes in the projection forming step as in Fig. 2(C).

At third timing 53 shown in Fig. 3(A) at which the amount of push-in reaches first setting value b, a projection formation load e is applied to the pair of pressurization shafts 11 and 12 as in Fig. 3(B). In the projection forming step, the amount of push-in is constant during a period from time t3 until time t4.

When the joining step in solid-phase joining is performed as in Fig. 2(D), as shown in Fig. 3(C), at time t4, controller 30 carries out control to start current feed at a current value g (kA) for joining from the pair of electrodes 21 and 22 to first workpiece W10 and second workpiece W20.

Furthermore, when the joining step in solid-phase joining is performed as in Fig. 2(D), at time t4 like fourth timing 54 shown in Fig. 3(A), controller 30 starts control to increase the amount of push-in from first setting value b to a third setting value d. Third setting value d is the amount of push-in at which the pair of pressurization shafts 11 and 12 reaches the joint position in solid-phase joining described with reference to Fig. 2. Third setting value d is set based on data of the workpiece, including the thickness and the material of first workpiece W10 and second workpiece W20.

When the amount of push-in reaches third setting value d, a joining load f is applied to the pair of pressurization shafts 11 and 12 as in Fig. 3(B). As such a joining load f is applied to the pair of pressurization shafts 11 and 12 in the joining step, joining of first workpiece W10 and second workpiece W20 can be completed.

Thus, in the joining step, at time t4 or later, current feed as shown in Fig. 3(C) and push-in as shown in Fig. 3(A) are started. Then in the joining step, as shown in Fig. 3(A), when the amount of push-in reaches second setting value c, for example, at time t5, controller 30 carries out control to terminate current feed from the pair of electrodes 21 and 22 to first workpiece W10 and second workpiece W20.

As described with reference to Fig. 2, second setting value c is the setting value for the amount of push-in set for termination of current feed before production of at least one of gap 8 between first workpiece W10 and first electrode 21 and gap 9 between second workpiece W20 and second electrode 22. Such second setting value c is the setting value for the amount of push-in determined based on measurement data obtained by conducting experiments to measure and analyze relation between the amount of push-in of the pair of pressurization shafts 11 and 12 and production of gaps 8 and 9 at first workpiece W10 and second workpiece W20 as described previously.

Second setting value c is set to a value of the amount of push-in before production of at least one of gap 8 between first workpiece W10 and first electrode 21 and gap 9 between second workpiece W20 and second electrode 22, the amount of push-in being within a range where softening of the region of joint between first workpiece W10 and second workpiece W20 by current feed by the pair of electrodes 21 and 22 is not interfered, based on data obtained by measurement in advance, of relation between the amount of push-in of the pair of pressurization shafts 11 and 12 and whether or not discharging occurs between electrodes 21 and 22 and first workpiece W10 and second workpiece W20.

Controller 30 thus continues to control push-in of the pair of pressurization shafts 11 and 12 described previously when it carries out control to terminate current feed as the amount of push-in reaches second setting value c.

After the amount of push-in reaches second setting value c, for example, at fifth timing 55 as shown in Fig. 3(A), at least one of gap 8 between first workpiece W10 and first electrode 21 and gap 9 between second workpiece W20 and second electrode 22 may be produced as shown in Fig. 2(E).

In the solid-phase joining method in the present embodiment, however, even when such a gap is produced, controller 30 carries out control to terminate current feed from the pair of electrodes 21 and 22 to first workpiece W10 and second workpiece W20 before such a gap is produced and hence discharging due to production of such a gap can be prevented from occurring. An effect to prevent such occurrence of discharging is noticeable, for example, in joining soft metal to soft metal as in the example where first workpiece W10 and second workpiece W20 are both composed of the aluminum alloy. Such an effect is more noticeable as first workpiece W10 and second workpiece W20 to be joined are softer.

### <Description of Control in Solid-Phase Joining Method According to Present Embodiment>

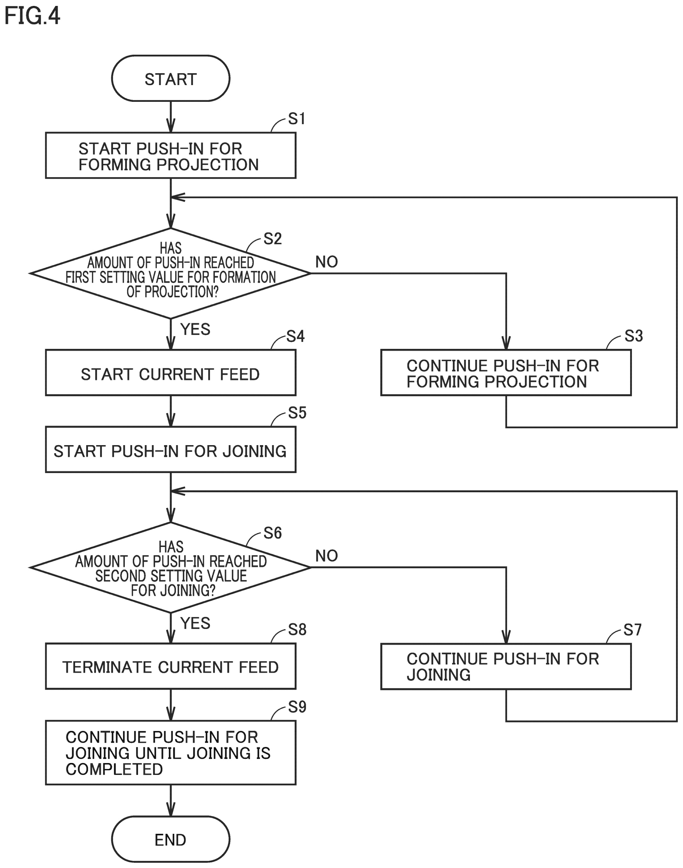

A flow of control in the solid-phase joining method according to the present embodiment will now be described. Fig. 4 is a flowchart showing the flow of control in the solid-phase joining method according to the present embodiment. Control which will be described below is carried out by reading and execution by computing device 31, of a control program stored in memory 32 in controller 30.

In step S1, controller 30 controls drive apparatus 13 to start the operation to push in the pair of pressurization shafts 11 and 12 for forming a projection like projection 6 or 7 shown in Fig. 2(C) at first workpiece W10 and second workpiece W20 in the projection forming step.

In step S2, controller 30 determines whether or not the amount of push-in detected by movement amount sensor 41 has reached the first setting value (first setting value b in Fig. 3(A)) for forming the projection in the projection forming step. When controller 30 determines in step S2 that the amount of push-in has not reached the first setting value, it determines that formation of projection has not been completed in the projection forming step, and in step S3, it has the pair of pressurization shafts 11 and 12 continue the push-in operation for forming the projection in the projection forming step. After step S3, the process returns to step S2.

When controller 30 determines in step S2 that the amount of push-in has reached the first setting value, it determines that formation of the projection has been completed in the projection forming step, and in step S4, it controls power supply apparatus 35 to start current feed from the pair of electrodes 21 and 22 to first workpiece W10 and second workpiece W20. In step S4, controller 30 starts the joining step.

In step S5, controller 30 controls drive apparatus 13 to start the operation to push in the pair of pressurization shafts 11 and 12 for joining first workpiece W10 and second workpiece W20 in the joining step.

In step S6, controller 30 determines whether or not the amount of push-in detected by movement amount sensor 41 has reached the second setting value (second setting value c in Fig. 3(A)) for terminating current feed in the joining step. When controller 30 determines in step S6 that the amount of push-in has not reached the second setting value, it determines that current feed is not to be terminated in the joining step, and in step S7, it has the operation to push in the pair of pressurization shafts 11 and 12 in the joining step continue. After step S7, the process returns to step S6.

When controller 30 determines in step S6 that the amount of push-in has reached the second setting value, it determines that current feed in the joining step is to be terminated, and in step S8, it controls power supply apparatus 35 to terminate current feed from the pair of electrodes 21 and 22 to first workpiece W10 and second workpiece W20.

In step S9, controller 30 has the operation to push in the pair of pressurization shafts 11 and 12 in the joining step continue until the amount of push-in reaches the third setting value (third setting value d in Fig. 3(A)) in the joining step, and joining of first workpiece W10 and second workpiece W20 is completed. Thereafter, controller 30 quits processing in the projection forming step and the joining step.

In Fig. 4, step S1 to step S3 are included in the projection forming step and step S4 to step S9 are included in the joining step.

As controller 30 carries out control as shown in Fig. 4, in solid-phase joining, the controller carries out control to terminate current feed from the pair of electrodes 21 and 22 to first workpiece W10 and second workpiece W20 before production of at least one of gap 8 between first workpiece W10 and first electrode 21 and gap 9 between second workpiece W20 and second electrode 22 as shown in Fig. 2(E), and hence occurrence of discharging due to production of such a gap 8 or 9 can be prevented.

### <Description of Exemplary Experiment of Second Setting Value at Which Current Feed Is Stopped in Accordance with Amount of Push-in>

An exemplary experiment of the second setting value at which current feed is stopped in accordance with the amount of push-in will now be described. Experimental data in an example where aluminum alloys as first workpiece W10 and second workpiece W20 are joined in the solid phase to each other with the use of solid-phase joining apparatus 1 as shown in Fig. 1 is as below.

A first experiment was initially conducted, in which control as described previously to terminate current feed by the pair of electrodes 21 and 22 was not carried out in the middle of the joining step in solid-phase joining apparatus 1. In the first experiment, the aluminum alloy the same in type was employed for first workpiece W10 and second workpiece W20 and controller 30 carried out control to push in the pair of pressurization shafts 11 and 12 until a discharging state occurred, with a current value of current feed by the pair of electrodes 21 and 22 being set to 17 kA and with a speed of push-in of the pair of pressurization shafts 11 and 12 being set to 20 mm/sec in the joining step.

In such a first experiment, when the operation to push in by the pair of pressurization shafts 11 and 12 from the push-in start position as in Fig. 2(A) was started and when the amount of push-in detected by movement amount sensor 41 exceeded 1.5 mm, a gap was produced at at least one of a location between first workpiece W10 and first electrode 21 and a location between second workpiece W20 and second electrode 22 and discharging occurred.

Then, a second experiment was conducted, in which the amount of push-in as the second setting value at which current feed was to be stopped was set to 1.5 mm and control to terminate current feed by the pair of electrodes 21 and 22 in the middle of the joining step as described previously was carried out in solid-phase joining apparatus 1. Conditions relating to the material for first workpiece W10 and second workpiece W20, the current value in current feed by the pair of electrodes 21 and 22 in the joining step, and the speed of push-in of the pair of pressurization shafts 11 and 12 in the second experiment were the same as those in the first experiment.

In such a second experiment, when the amount of push-in reached 1.5 mm which was the second setting value in the middle of the joining step, current feed by the pair of electrodes 21 and 22 was terminated, the operation to push in by the pair of pressurization shafts 11 and 12 continued, and solid-phase joining of first workpiece W10 and second workpiece W20 was completed. In such a second experiment, when the amount of push-in exceeded 1.5 mm, no gap was produced at the location between first workpiece W10 and first electrode 21 and the location between second workpiece W20 and second electrode 22 and discharging did not occur.

In the second experiment, the amount of push-in to be set as the second setting value was determined based on experimental data in the first experiment, and the determined amount of push-in was set as the second setting value. Then, the solid-phase joining method according to the present embodiment was performed. Consequently, in solid-phase joining, no gap was produced at the location between first workpiece W10 and first electrode 21 and the location between second workpiece W20 and second electrode 22 and discharging did not occur. The result of solid-phase joining thus exhibited good quality.

Therefore, in the solid-phase joining method according to the present embodiment, the second setting value at which current feed is to be terminated in accordance with the amount of push-in should be determined and set based on experimental data in such experiments.

### <Exemplary Effect Obtained in Embodiment>

(1) In solid-phase joining, as shown in Fig. 4, when the current is fed from the pair of electrodes 21 and 22 to first workpiece W10 and second workpiece W20 while first workpiece W10 and second workpiece W20 are pressed by the pair of pressurization shafts 11 and 12, in response to the amount of push-in from start of pressing by the pair of pressurization shafts 11 and 12 reaching second setting value c, current feed by the pair of electrodes 21 and 22 is terminated while pressing by the pair of pressurization shafts 11 and 12 continues. Current feed by the pair of electrodes 21 and 22 is thus terminated in response to the amount of push-in of the pair of pressurization shafts 11 and 12 reaching second setting value c. Therefore, even when gap 8 or 9 is thereafter produced between first workpiece W10 and second workpiece W20 and the pair of electrodes 21 and 22 due to deformation of first workpiece W10 and the second workpiece, a discharging phenomenon can be prevented from occurring. Therefore, according to the present disclosure, the discharging phenomenon caused by gap 8 or 9 between first workpiece W10 and second workpiece W20 and the pair of electrodes 21 and 22 can be prevented and lowering in quality of solid-phase joining which may be caused by feed of the current from the pair of electrodes 21 and 22 to first workpiece W10 and second workpiece W20 can be suppressed.

Since second setting value c as shown in Fig. 3(A) is set to the value of the amount of push-in before formation of the gap where discharging may occur between at least one of first workpiece W10 and second workpiece W20 and the pair of electrodes 21 and 22 due to deformation of at least one of first workpiece W10 and second workpiece W20, the discharging phenomenon caused by gap 8 or 9 between first workpiece W10 and second workpiece W20 and the pair of electrodes 21 and 22 can reliably be suppressed.

Since second setting value c as shown in Fig. 3(A) is set to the value of the amount of push-in within the range where softening of the region of joint between first workpiece W10 and second workpiece W20 by current feed by the pair of electrodes 21 and 22 is not interfered, based on data obtained by measurement in advance of relation between the amount of push-in of the pair of pressurization shafts 11 and 12 and whether or not discharging occurs, the discharging phenomenon caused by gap 8 or 9 between first workpiece W10 and second workpiece W20 and the pair of electrodes 21 and 22 can reliably be suppressed without influence on softening of the joint region in solid-phase joining.

In the example where first workpiece W10 and second workpiece W20 are composed, for example, of soft metal such as the aluminum alloy, the discharging phenomenon caused by gap 8 or 9 between first workpiece W10 and second workpiece W20 and the pair of electrodes 21 and 22 can be suppressed.

In the example where first workpiece W10 and second workpiece W20 are composed, for example, of the same soft metal such as the aluminum alloy, the discharging phenomenon caused by gap 8 or 9 between first workpiece W10 and second workpiece W20 and the pair of electrodes 21 and 22 can be suppressed.

When soft metal such as the aluminum alloy, aluminum, gold, and silver is used, the discharging phenomenon caused by gap 8 or 9 between first workpiece W10 and second workpiece W20 and the pair of electrodes can be suppressed.

### <Description of Modification>

(1) The amount of push-in at which control to terminate current feed from the pair of electrodes 21 and 22 to first workpiece W10 and second workpiece W20 is carried out when it is reached is set as second setting value c described previously.

By detecting whether or not there is a gap between first workpiece W10 and first electrode 21, detecting whether or not there is a gap between second workpiece W20 and second electrode 22, and specifying the amount of push-in upon detection of at least one gap based on a value detected by movement amount sensor 41, such second setting value c may be set to the amount of push-in smaller than the specified amount of push-in.

Alternatively, by detecting whether or not the discharging phenomenon occurs between first workpiece W10 and first electrode 21, detecting whether or not the discharging phenomenon occurs between second workpiece W20 and second electrode 22, and specifying the amount of push-in upon detection of at least one discharging phenomenon based on a value detected by movement amount sensor 41, such second setting value c may be set to the amount of push-in smaller than the specified amount of push-in.

(2) The exemplary configuration is shown, in which the pair of pressurization shafts 11 and 12 is pushed into first workpiece W10 and second workpiece W20, with second pressurization shaft 12, of first pressurization shaft 11 and second pressurization shaft 12, being fixed and with first pressurization shaft 11 operating in solid-phase joining apparatus 1 with which the solid-phase joining method described previously is performed. Without being limited as such, solid-phase joining apparatus 1 with which the solid-phase joining method described previously is performed may be configured to have both of first pressurization shaft 11 and second pressurization shaft 12 operate to push the pair of pressurization shafts 11 and 12 into first workpiece W10 and second workpiece W20.

(3) In the embodiment described previously, the exemplary configuration is described, in which the position of first electrode 21 in the thickness direction of first workpiece W10 is adjusted by first adjustment apparatus 14 and first air cylinder 16. Without being limited as such, solid-phase joining apparatus 1 may be configured to adjust the position of first electrode 21 in the thickness direction of first workpiece W10 only with first air cylinder 16, without being provided with first adjustment apparatus 14.

(4) In the embodiment described previously, the exemplary configuration is described, in which the position of second electrode 22 in the thickness direction of second workpiece W20 is adjusted by second adjustment apparatus 15 and second air cylinder 17. Without being limited as such, solid-phase joining apparatus 1 may be configured to adjust the position of second electrode 22 in the thickness direction of second workpiece W20 only with second air cylinder 17, without being provided with second adjustment apparatus 15.

(5) In the embodiment described previously, the example is shown, in which an air cylinder such as first air cylinder 16 and second air cylinder 17 is used to adjust the position of the pair of electrodes 21 and 22. Without being limited as such, a configuration to adjust the position of the pair of electrodes 21 and 22 with a servo motor instead of the air cylinder may be employed in order to adjust the position of the pair of electrodes 21 and 22.

### <Summary>

(1) A solid-phase joining method in the present disclosure includes forming a projection (projection 6 or 7) at at least one of the first workpiece (first workpiece W10) and the second workpiece (second workpiece W20) layered on each other in a thickness direction by pressing the first workpiece (first workpiece W10) and the second workpiece (second workpiece W20) with a pair of pressurization shafts (first pressurization shaft 11 and second pressurization shaft 12) arranged at opposing sides in the thickness direction (step S1 to step S3), starting current feed to the first workpiece (first workpiece W10) and the second workpiece (second workpiece W20) from a pair of electrodes (first electrode 21 and second electrode 22) while the pair of pressurization shafts (first pressurization shaft 11 and second pressurization shaft 12) presses the first workpiece (first workpiece W10) and the second workpiece (second workpiece W20) (step S4), the pair of electrodes (first electrode 21 and second electrode 22) being arranged around the pair of pressurization shafts (first pressurization shaft 11 and second pressurization shaft 12) and being in contact with the first workpiece (first workpiece W10) and the second workpiece (second workpiece W20), respectively, and terminating current feed by the pair of electrodes (first electrode 21 and second electrode 22) (step S8) while pressing by the pair of pressurization shafts (first pressurization shaft 11 and second pressurization shaft 12) continues (step S5 to step S7 and step S9), in response to an amount of push-in of the pair of pressurization shafts (first pressurization shaft 11 and second pressurization shaft 12) in the thickness direction of the first workpiece (first workpiece W10) and the second workpiece (second workpiece W20) from start of pressing by the pair of pressurization shafts (first pressurization shaft 11 and second pressurization shaft 12) reaching a setting value.

According to such a configuration, in solid-phase joining, in response to the amount of push-in from start of pressing by the pair of pressurization shafts reaching the setting value when the current is fed from the pair of electrodes to the first workpiece and the second workpiece while the first workpiece and the second workpiece are pressed by the pair of pressurization shafts, current feed by the pair of electrodes is terminated while pressing by the pair of pressurization shafts continues. Current feed by the pair of electrodes is thus terminated in response to the amount of push-in of the pair of pressurization shafts reaching the setting value. Therefore, even when a gap is thereafter produced between the first workpiece and the second workpiece and the pair of electrodes due to deformation of the first workpiece and the second workpiece, the discharging phenomenon can be prevented from occurring. Therefore, according to the present disclosure, the discharging phenomenon caused by a gap between the first workpiece and the second workpiece and the pair of electrodes can be prevented and lowering in quality of solid-phase joining which may be caused by feed of the current from the pair of electrodes to the first workpiece and the second workpiece can be suppressed.

(2) In the solid-phase joining method in (1), the setting value is set to a value of the amount of push-in before a gap (gap 8 or 9) where discharging may occur is formed, in accordance with pressing by the pair of pressurization shafts (first pressurization shaft 11 and second pressurization shaft 12) after start of current feed by the pair of electrodes (first electrode 21 and second electrode 22), the gap being located between at least one of the first workpiece (first workpiece W10) and the second workpiece (second workpiece W20) and the pair of electrodes due to deformation of at least one of the first workpiece (first workpiece W10) and the second workpiece (second workpiece W20).

According to such a configuration, since the setting value is set to the value of the amount of push-in before formation of the gap where discharging may occur between at least one of the first workpiece and the second workpiece and the pair of electrodes due to deformation of at least one of the first workpiece and the second workpiece, the discharging phenomenon caused by a gap between the first workpiece and the second workpiece and the pair of electrodes can reliably be suppressed.

(3) In the solid-phase joining method in (2), the setting value is set to the value of the amount of push-in within a range where softening of a region of joint between the first workpiece (first workpiece W10) and the second workpiece (second workpiece W20) by current feed by the pair of electrodes (first electrode 21 and second electrode 22) is not interfered, based on data obtained by measurement in advance of relation between the amount of push-in of the pair of pressurization shafts (first pressurization shaft 11 and second pressurization shaft 12) and whether the discharging occurs.

According to such a configuration, the setting value is set to the value of the amount of push-in within the range where softening of the region of joint between the first workpiece and the second workpiece by current feed by the pair of electrodes is not interfered, based on data obtained by measurement in advance of relation between the amount of push-in of the pair of pressurization shafts and whether or not discharging occurs. Therefore, the discharging phenomenon caused by a gap between the first workpiece and the second workpiece and the pair of electrodes can reliably be suppressed without influence on softening of the joint region in solid-phase joining.

(4) In the solid-phase joining method in any one of (1) to (3), the first workpiece (first workpiece W10) and the second workpiece (second workpiece W20) are composed of soft metal (aluminum, gold, silver, or the like).

According to such a configuration, in the example where the first workpiece and the second workpiece are composed of soft metal, the discharging phenomenon caused by a gap between the first workpiece and the second workpiece and the pair of electrodes can be suppressed.

(5) In the solid-phase joining method in (4), the first workpiece (first workpiece W10) and the second workpiece (second workpiece W20) are composed of the same soft metal (aluminum, gold, silver, or the like).

According to such a configuration, in the example where the first workpiece and the second workpiece are composed of the same soft metal, the discharging phenomenon caused by a gap between the first workpiece and the second workpiece and the pair of electrodes can be suppressed.

(6) In the solid-phase joining method in (4) or (5), the soft metal includes aluminum.

According to such a configuration, in such soft metal as containing aluminum, the discharging phenomenon caused by a gap between the first workpiece and the second workpiece and the pair of electrodes can be suppressed.

(7) A solid-phase joining apparatus in the present disclosure includes a pair of pressurization shafts (first pressurization shaft 11 and second pressurization shaft 12) that presses a first workpiece (first workpiece W10) and a second workpiece (second workpiece W20) layered in a thickness direction, from opposing sides in the thickness direction, a pair of electrodes (first electrode 21 and second electrode 22) arranged around the pair of pressurization shafts (first pressurization shaft 11 and second pressurization shaft 12), respectively, and a controller (controller 30) that controls the pair of pressurization shafts (first pressurization shaft 11 and second pressurization shaft 12) and the pair of electrodes (first electrode 21 and second electrode 22). The controller (controller 30) carries out control such that a projection (projection 6 or 7) is formed at at least one of the first workpiece (first workpiece W10) and the second workpiece (second workpiece W20) by the pair of pressurization shafts (first pressurization shaft 11 and second pressurization shaft 12) pressing the first workpiece (first workpiece W10) and the second workpiece (second workpiece W20) (step S1 to step S3), current feed from the pair of electrodes (first electrode 21 and second electrode 22) in contact with the first workpiece (first workpiece W10) and the second workpiece (second workpiece W20) to the first workpiece (first workpiece W10) and the second workpiece (second workpiece W20) is started (step S4) while the pair of pressurization shafts (first pressurization shaft 11 and second pressurization shaft 12) presses the first workpiece (first workpiece W10) and the second workpiece (second workpiece W20), and current feed by the pair of electrodes (first electrode 21 and second electrode 22) is terminated (step S8) while pressing by the pair of pressurization shafts (first pressurization shaft 11 and second pressurization shaft 12) continues (step S5 to step S7 and step S9), in response to an amount of push-in of the pair of pressurization shafts (first pressurization shaft 11 and second pressurization shaft 12) in the thickness direction of the first workpiece (first workpiece W10) and the second workpiece (second workpiece W20) from start of pressing by the pair of pressurization shafts (first pressurization shaft 11 and second pressurization shaft 12) reaching a setting value.

According to such a configuration, in solid-phase joining, in response to the amount of push-in from start of pressing by the pair of pressurization shafts reaching the setting value when the current is fed from the pair of electrodes to the first workpiece and the second workpiece while the first workpiece and the second workpiece are pressed by the pair of pressurization shafts, current feed by the pair of electrodes is terminated while pressing by the pair of pressurization shafts continues. Current feed by the pair of electrodes is thus terminated in response to the amount of push-in of the pair of pressurization shafts reaching the setting value. Therefore, even when a gap is thereafter produced between the first workpiece and the second workpiece and the pair of electrodes due to deformation of the first workpiece and the second workpiece, the discharging phenomenon can be prevented from occurring. Therefore, according to the present disclosure, the discharging phenomenon caused by a gap between the first workpiece and the second workpiece and the pair of electrodes can be prevented and lowering in quality of solid-phase joining which may be caused by feed of the current from the pair of electrodes to the first workpiece and the second workpiece can be suppressed.

(8) In the solid-phase joining apparatus in (7), the setting value is set to a value of the amount of push-in before a gap (gap 8 or 9) where discharging may occur is formed, in accordance with pressing by the pair of pressurization shafts (first pressurization shaft 11 and second pressurization shaft 12) after start of current feed by the pair of electrodes (first electrode 21 and second electrode 22), the gap being located between at least one of the first workpiece (first workpiece W10) and the second workpiece (second workpiece W20) and the pair of electrodes (first electrode 21 and second electrode 22) due to deformation of at least one of the first workpiece (first workpiece W10) and the second workpiece (second workpiece W20).

According to such a configuration, since the setting value is set to the value of the amount of push-in before formation of the gap where discharging may occur between at least one of the first workpiece and the second workpiece and the pair of electrodes due to deformation of at least one of the first workpiece and the second workpiece, the discharging phenomenon caused by a gap between the first workpiece and the second workpiece and the pair of electrodes can reliably be suppressed.

Though an embodiment of the present invention has been described, it should be understood that the embodiment disclosed herein is illustrative and non-restrictive in every respect. The scope of the present invention is defined by the terms of the claims and is intended to include any modifications within the scope and meaning equivalent to the terms of the claims.

## Claims

1. A solid-phase joining method comprising:
forming a projection (6, 7) at at least one of a first workpiece (W10) and a second workpiece (W20) layered on each other in a thickness direction by pressing the first workpiece (W10) and the second workpiece (W20) with a pair of pressurization shafts (11, 12) arranged at opposing sides in the thickness direction;
starting current feed to the first workpiece (W10) and the second workpiece (W20) from a pair of electrodes (21, 22) while the pair of pressurization shafts presses the first workpiece (W10) and the second workpiece (W20), the pair of electrodes being arranged around the pair of pressurization shafts (11, 12) and being in contact with the first workpiece (W10) and the second workpiece (W20), respectively; and
terminating current feed by the pair of electrodes (21, 22) while pressing by the pair of pressurization shafts (11, 12) continues, in response to an amount of push-in of the pair of pressurization shafts (11, 12) in the thickness direction of the first workpiece (W10) and the second workpiece (W20) from start of pressing by the pair of pressurization shafts (11, 12) reaching a setting value.

2. The solid-phase joining method according to claim 1, wherein
the setting value is set to a value of the amount of push-in before a gap (8, 9) where discharging may occur is formed, in accordance with pressing by the pair of pressurization shafts (11, 12) after start of current feed by the pair of electrodes (21, 22), the gap being located between at least one of the first workpiece (W10) and the second workpiece (W20) and the pair of electrodes (21, 22) due to deformation of at least one of the first workpiece (W10) and the second workpiece (W20).

3. The solid-phase joining method according to claim 2, wherein
the setting value is set to the value of the amount of push-in within a range where softening of a region of joint between the first workpiece (W10) and the second workpiece (W20) by current feed by the pair of electrodes (21, 22) is not interfered, based on data obtained by measurement in advance of relation between the amount of push-in of the pair of pressurization shafts (11, 12) and whether the discharging occurs.

4. The solid-phase joining method according to claim 1 or 2, wherein
the first workpiece (W10) and the second workpiece (W20) are composed of soft metal.

5. The solid-phase joining method according to claim 4, wherein
the first workpiece (W10) and the second workpiece (W20) are composed of the same soft metal.

6. The solid-phase joining method according to claim 4, wherein
the soft metal includes aluminum.

7. A solid-phase joining apparatus comprising:
a pair of pressurization shafts (11, 12) that presses a first workpiece (W10) and a second workpiece (W20) layered in a thickness direction, from opposing sides in the thickness direction;
a pair of electrodes (21, 22) arranged around the pair of pressurization shafts (11, 12), respectively; and
a controller (30) that controls the pair of pressurization shafts (11, 12) and the pair of electrodes (21, 22), wherein
the controller (30) is configured to carry out control such that
a projection (6, 7) is formed at at least one of the first workpiece (W10) and the second workpiece (W20) by the pair of pressurization shafts (11, 12) pressing the first workpiece (W10) and the second workpiece (W20);
current feed from the pair of electrodes (21, 22) in contact with the first workpiece (W10) and the second workpiece (W20) to the first workpiece (W10) and the second workpiece (W20) is started while the pair of pressurization shafts (11, 12) presses the first workpiece (W10) and the second workpiece (W20); and
current feed by the pair of electrodes (21, 22) is terminated while pressing by the pair of pressurization shafts (11, 12) continues, in response to an amount of push-in of the pair of pressurization shafts (11, 12) in the thickness direction of the first workpiece (W10) and the second workpiece (W20) from start of pressing by the pair of pressurization shafts (11, 12) reaching a setting value.

8. The solid-phase joining apparatus according to claim 7, wherein
the setting value is set to a value of the amount of push-in before a gap (8, 9) where discharging may occur is formed, in accordance with pressing by the pair of pressurization shafts (11, 12) after start of current feed by the pair of electrodes (21, 22), the gap being located between at least one of the first workpiece (W10) and the second workpiece (W20) and the pair of electrodes (21, 22) due to deformation of at least one of the first workpiece (W10) and the second workpiece (W20).
